# EUROPEAN PATENT APPLICATION

(11) **EP 4 755 544 A1**
(43) Date of publication of application: **10.06.2026**
(21) Application number: 24848617.7
(22) Date of filing: 24.04.2024
(51) Int. Cl.: B21D 22/20, B21D 22/26, B23K 11/00, B23K 11/11

(54) **METHOD FOR MANUFACTURING PRESS-FORMED PART, PRESS-FORMED PART, METHOD FOR MANUFACTURING BLANK FOR PRESS FORMING, AND BLANK FOR PRESS FORMING**

(30) Priority: 28.07.2023 JP 2023123716; 14.12.2023 JP 2023211458
(71) Applicant: Nippon Steel Corporation, Tokyo 100-8071 (JP)
(72) Inventor: KUBO, Masahiro, Tokyo 100-8071 (JP); KIMOTO, Naoki, Tokyo 100-8071 (JP); SHIRAKAMI, Satoshi, Tokyo 100-8071 (JP); YOSHIDA, Hiroshi, Tokyo 100-8071 (JP); IKEGAMI, Kenta, Tokyo 100-8071 (JP)
(74) Representative: Vossius & Partner Patentanwälte Rechtsanwälte mbB
(86) International application number: PCT/JP2024/015977
(87) International publication number: WO 2025/027956

(57) **Abstract**

The present invention has as its technical problem to suppress cracks and other failure at the time of press-forming an integrated blank formed by partially overlapping a plurality of partial blanks and has as its object the provision of such a blank (integrated blank).

The present invention provides a method for manufacturing a blank for press-forming comprised of a plurality of partial blanks made of steel sheets joined into one piece, the blank for press-forming having an overlap section configured by at least two partial blanks partially overlaid, the method finding the material inflow amounts of the partial blanks (movement vectors of points on partial blanks) due to press-forming in advance at the overlap section and joining the partial blanks forming the overlap section at only a section with an absolute value of difference of inflows (movement vectors) smaller than a predetermined limit value so as to produce a blank for press-forming, hot press-forming the blank, then joining the other parts of the overlap section to obtain a desired press-formed part.

## Description

### FIELD

The present invention relates to a method for manufacturing a press-formed part using a tailored welded blank, a press-formed part, of a method for manufacturing a blank for press-forming, and a blank for press-forming.

### BACKGROUND

In automobiles etc., reduction of the life cycle GHG (total amount of emission of greenhouse gases in life cycle as a whole) is being sought. Demand has also been rising for modularization of parts aimed at streamlining production lines through reduction of number of parts and elimination of steps. For that reason, along with the introduction of optimized designs, demand has been rising for production of parts by press-forming blanks formed by combining different types of steel sheets in parts, so-called "tailored welded blanks (TWB)". Various techniques for press-forming TWB have been proposed up to now (for example, PTL 1).

Blanks comprised of TWB joined together (integrated blanks) are usually produced by butt welding blanks for individual parts (partial blanks) comprised of steel sheets of different thicknesses and types. Along with the increasing size of integrated blanks, the method has been proposed of making two partial blanks partially overlap and spot welding that overlap section to produce an integrated blank (PTL 2). With increasing sizes of part modules and the accompanying trend toward greater efficiency and lower costs of part manufacture, production of parts by bulk press-forming of integrated blanks is increasingly being looked at.

For example, PTL 3 describes production of automobile structural parts in which inside front pillars, inside center pillars, and inside side rails are separately produced by hot pressing during which the inside front pillars and inside center pillars are hot pressed with reinforcing blanks locally attached. However, the automobile structural parts disclosed in PTL 3 are integrally formed for each part in the broad sense, but an automobile structural part (in PTL 3, an upper door ring part) is not integrally formed.

### [CITATIONS LIST]

### [PATENT LITERATURE]

[PTL 1] WO2020/059804
[PTL 2] Japanese Unexamined Patent Publication No. 2021-528248
[PTL 3] WO2017/098427

### SUMMARY

### [TECHNICAL PROBLEM]

When press-forming an integrated blank obtained by overlaying and joining (for example, spot welding, lap welding, etc.) two partial blanks, sometimes cracks or other failure are observed at the overlap sections of the partial blanks. If a crack or other failure occurs in a part, the quality of the part is greatly lowered and the part is disposed of. That is, a failure of a press-formed part leads to problems not only in quality, but also in productivity.

Such a problem has not be recognized in hot press-forming (hot stamping) - in which greater work strain can be allowed compared with cold working. In particular, along with the demands for greater complexity in the shapes of parts and the demands for integral shaping of large sized parts (for example automobile structural parts such as door rings etc.), integral shaping by hot pressing of integrated blanks using tailored welded blanks is being sought. Sometimes cracks and other failure are observed at the overlap sections of the partial blanks. Problems have been surfacing.

The present invention has as its object suppressing cracks and other failure at the time of press-forming an integrated blank formed by partially overlaying a plurality of partial blanks.

### [SOLUTION TO PROBLEM]

The inventors engaged in intensive development work for realizing the above object and obtained the following discoveries.
(A) First, the inventors produced blanks for press-forming having overlap sections comprised of at least two partial blanks partially overlapped when joining a plurality of partial blanks made of steel sheets joined into one piece and investigated and verified the state of occurrence of failure. As one example, they produced, investigated, and verified blanks for press-forming with overlap sections joined by spot welding.
   When they examined parts after press-forming, they learned that failure of partial blanks occurred at the overlap sections where the partial blanks were overlaid. When analyzing this by experiments and simulation using a door ring of an automobile as an example, it was learned that failure occur at the parts deformed by stretch flanging at the overlap sections of the lower A pillar (lower part of A pillar having L-shape) and the lower B pillar (lower part of B pillar having T shape) and their vicinities. Conversely speaking, it was learned that failure do not occur at parts not deformed by stretch flanging.
(B) Furthermore, when the inventors analyzed this further, they discovered that the location of occurrence of failure (i) is a part where the material flow behaviors of the partial blanks when the overlap section deforms greatly differ and (ii) is a part where material flow is limited by the joining method (in the case of the investigated example, spot welding).

That is, if the difference in material inflow amounts between partial blanks becomes greater due to press-forming, it is believed that shear deformation will occur at the joined parts (spot welded parts) and deformation will greatly concentrate near the spot welded parts (factor (i)). Due to the material flows being restricted there due to joining (spot welding), it is believed deformation accompanied with material inflow such as deformation by stretch flanging will no longer occur and deformation will concentrate leading to failure (factor (ii)).

This surfaces in working accompanied with great deformation even in hot press-forming (hot stamping) where greater work strain can be allowed compared with cold working. Along with the demands for parts with more complicated shapes, integrated blanks and hot press-forming methods contributing to hot press-forming of integrated blanks by tailored welded blanks are being sought.

(C) To stop failure, the inventors analyzed the material flow behaviors of partial blanks during hot press-forming by simulation and thought that by dividing materials into sections with little difference in inflow and sections with large difference in inflow and joining (spot welding, lap welding, etc.) the partial blanks only at sections with little difference in inflow of material, it would be possible to stop failure at the time of hot press-forming, and proceeded with development based on this.

As a result, it was confirmed that even at parts deforming by stretch flanging and other parts with large differences in material inflow amounts between partial blanks, failure does not occur unless joining the parts.

It was also confirmed that by joining not joined parts of an overlap section by spot welding etc. after hot press-forming, a press-formed part comprised of partial blanks joined into one piece is obtained.

Above, the inventors engaged in investigations and studies using blanks for press-forming joined by spot welding overlap sections of partial blanks, but the invention is not limited to spot welding. The same is true even in the case of joining overlap sections by another joining method (for example, lap welding (arc welding, laser welding) or lap fillet welding (arc welding, laser welding), brazing, friction stir welding (FSW), friction press welding, etc.

It was confirmed that by the above methods, even with an integrated blank (TWB) having a part comprised of a plurality of partial blanks overlaid (overlap section), it is possible to perform hot press-forming without failure and possible to obtain a press-formed part having strength and rigidity.

The present invention was made based on the above discovery and has as its gist the following:
[1-1] A method for manufacturing a press-formed part comprising
   a press-forming use blank working step for obtaining a blank for press-forming comprised of a plurality of partial blanks made of steel sheets joined into one piece, the blank for press-forming having an overlap section configured by at least two partial blanks partially overlaid,
   a hot press-forming step for hot press-forming the blank for press-forming to thereby obtaining a press-formed part, and
   a pressed part joining step for joining a part of the press-formed part,
   the press-forming use blank working step including a step of finding in advance the material inflow amounts of the partial blanks forming the overlap section due to press-forming and joining the partial blanks forming the overlap section at only a section with a difference of material inflow amounts of the partial blanks smaller than a predetermined limit value, and
   the pressed part joining step including a step of joining a section in the overlap section not joined in the press-forming use blank working step.
   The predetermined limit value can, for example, be made the offset amount of the difference in material inflow amounts arising due to hot press-forming (for example, the offset amount between materials (between partial blanks) arising when assuming a location corresponding to a welded part was not welded) and the offset amount when becoming the tensile shear stress (TSS) or less allowed when becoming the part.
[1-2] The method for manufacturing a press-formed part according to [1-1], wherein the joining method is spot welding,
   which method for manufacturing a press-formed part comprising
   a press-forming use blank working step for obtaining a blank for press-forming comprised of a plurality of partial blanks made of steel sheets joined into one piece, the blank for press-forming having an overlap section configured by at least two partial blanks partially overlaid,
   a hot press-forming step for obtaining a press-formed part by hot press-forming the blank for press-forming, and
   a pressed part joining step for spot welding a part of the press-formed part,
   the press-forming use blank working step including a step of finding in advance the material inflow amounts of the partial blanks forming the overlap section due to press-forming and spot welding the partial blanks forming the overlap section at only a part with a difference of material inflow amounts of the partial blanks smaller than a predetermined limit value, and
   the pressed part joining step including a step of spot welding a part in the overlap section not spot welded in the press-forming use blank working step.
[1-3] The method for manufacturing a press-formed part according to [1-1] or [1-2], wherein the predetermined limit value is an absolute value of difference of material inflow amounts of the partial blanks due to press-forming of 1 mm,preferably 0.5 mm.
[1-4] The method for manufacturing a press-formed part according to any one of [1-1] to [1-3], wherein the overlap section of the press-formed part includes an L-shaped or T-shaped part.
[2-1] A press-formed part
   comprised of a plurality of partial blanks made of steel sheets joined together,
   joined together at a plurality of joined parts at an overlap section configured by at least two of the partial blanks partially overlaid,
   at a cross-section vertical to the surface of a partial blank at the outermost side among the partial blanks including a center of a joined part of the partial blank, at the position of the partial blank at 1/4 of the sheet thickness from the surface of the partial blank contiguous with another partial blank,
   when the Vickers hardness at a position 15 mm or more away from the center of the joined part and not joined is Hvm,
   some of the plurality of joined parts have a difference ΔHv of a maximum hardness and minimum hardness at the Vickers hardness in a range within 5 mm from an end part of the joined part to the base material side (or within 12 mm from the center of the joined part) of less than 0.2 Hvm, preferably 0.1 Hvm or less, while the other joined parts of the plurality of joined parts (joined parts other than some parts) t have a ΔHv of 0.2 Hvm or more, preferably 0.3 Hvm, 0.4 Hvm, or 0.5 Hvm or more.
   Note that, the "partial blank of the outermost side" here means the partial blank of the upper surface when placing the press-formed part with the projecting shape facing upward.
[2-2] The press-formed part according to [2-1], wherein the joining method is spot welding,
   which press-formed part is
   comprised of a plurality of partial blanks made of steel sheets joined together and
   joined together by a plurality of spot welds at an overlap section configured by at least two of the partial blanks partially overlaid,
   at a cross-section including a center of a spot weld of the partial blank at the outermost side among the partial blanks, at the position of the partial blank at 1/4 of the sheet thickness from the surface,
   when the Vickers hardness at a position 15 mm or more away from the center of the spot weld and not spot welded is Hvm,
   some of the plurality of spot welds have a difference ΔHv of a maximum hardness and minimum hardness in a range within a radius of 12 mm from the center of less than 0.2 Hvm, preferably 0.1 Hvm or less,
   while the other spot welds of the plurality of spot welds (spot welds other than that one part) have a ΔHv of 0.2 Hvm or more, preferably 0.3 Hvm, 0.4 Hvm, or 0.5 Hvm or more.
   Note that, the "partial blank of the outermost side" here means the partial blank of the upper surface when placing the press-formed part with the projecting shape facing upward.
[2-3] The press-formed part according to [2-1] or [2-2], wherein one section of the overlap section is a section with an absolute value of the difference of material inflow amounts of the partial blanks smaller than a predetermined limit value when finding in advance the material inflow amounts of the partial blanks at the overlap section due to press-forming.
   The specific method of analysis is as follows: the press-formed part is measured for 3D shape and shape data of the part is prepared. From the prepared shape data, for example, an AUTOFORM R.10 made by AUTOFORM is used to lay out the part and prepare data of the blank for use in press-forming. The obtained data of the blank can be used to analyze the difference in material flows of the different parts by a technique similar to the method of analysis of the difference in material flow amounts of partial blanks performed in the above-mentioned method of shaping of a press-formed part.
[2-4] The press-formed part according to [2-3] wherein the predetermined limit value is an absolute value of difference of material inflow amounts of the partial blanks due to press-forming of 1 m, preferably 0.5 mm.
[2-5] The press-formed part according to any one of [2-1] to [2-4], wherein the other section of the overlap section (section other than the one section of the overlap section) is a section deforming by stretch flanging due to press-forming.
   That is, the press-formed part according to any one of [2-1] to [2-4], wherein the joined parts other than the some of the plurality of joined parts are set to a section deforming by stretch flanging due to press-forming.
   Note that, a "section deforming by stretch flanging due to press-forming" means a section of the overlap section with an absolute value of difference of material inflow amounts of the partial blanks larger than a predetermined limit value when finding in advance the material inflow amounts of partial blanks at the overlap section due to press-forming. Further, for the method of analysis, as explained above, it is possible to measure the press-formed part for 3D shape, prepare shape data of the part, and analyze the shape data using, for example, an AUTOFORM R.10 made by AUTOFORM so as to judge a stretch deformed part.
[2-6] The press-formed part according to any one of [2-1] to [2-5], wherein the overlap section of the press-formed part includes an L-shaped or T-shaped part.
[3-1] A method for manufacturing a blank for press-forming comprised of a plurality of partial blanks made of steel sheets joined into one piece, the blank for press-forming having an overlap section configured by at least two partial blanks partially overlaid,
   the method for manufacturing a blank for press-forming including a step of finding the material inflow amounts of the partial blanks due to press-forming in advance at the overlap section and joining the partial blanks forming the overlap section at only a section with a difference of material inflow amounts of the partial blanks smaller than a predetermined limit value.
[3-2] The method for manufacturing a blank for press-forming according to [3-1], wherein the joining method is spot welding,
   in which method for manufacturing a blank for press-forming,
   the blank for press-forming comprised of a plurality of partial blanks made of steel sheets joined into one piece, the blank for press-forming having an overlap section configured by at least two partial blanks made to partially overlap,
   the method for manufacturing a blank for press-forming including a step of finding the material inflow amounts of the partial blanks due to press-forming in advance at the overlap section and spot welding the partial blanks forming the overlap section at only a section with a difference of material inflow amounts of the partial blanks smaller than a predetermined limit value.
[3-3] The method for manufacturing a blank for press-forming according to [3-1] or [3-2], wherein the predetermined limit value is an absolute value of difference of material inflow amounts of the partial blanks due to press-forming of 1 mm., preferably 0.5 mm.
[3-4] The method for manufacturing a blank for press-forming according to any one of [3-1] to [3-3], wherein the overlap section of the press-formed blanks includes an L-shaped or T-shaped part.
[4-1] A blank for press-forming comprised of a plurality of partial blanks made of steel sheets joined into one piece, the blank for press-forming having an overlap section configured by at least two partial blanks made to partially overlap, in which blank for press-forming, the partial blanks configuring the overlap section being joined at one section of the overlap section and not being joined at another section.
[4-2] The blank for press-forming according to [4-1], wherein the joining method is spot welding,
   in which blank for press-forming,
   which blank for press-forming comprised of a plurality of partial blanks made of steel sheets joined into one piece, the blank for press-forming having an overlap section configured by at least two partial blanks made to partially overlap, in which blank for press-forming, the partial blanks configuring the overlap section being joined at one section of the overlap section by spot welding and not being spot welded at another section.
[4-3] The blank for press-forming according to [4-1] or [4-2], wherein the one section of the overlap section is a section with an absolute value of the difference of material inflow amounts of the partial blanks smaller than a predetermined limit value when finding in advance the material inflow amounts of the partial blanks at the overlap section due to press-forming.
[4-4] The blank for press-forming according to [4-3], wherein the predetermined limit value is an absolute value of difference of material inflow amounts of the partial blanks due to press-forming of 1 mm, preferably 0.5 mm
[4-5] The blank for press-forming according to any one of [4-1] to [4-4], wherein the other section of the overlap section (section other than the one section of the overlap section) is a part deformed by strength flanging by press-forming .
[4-6] The blank for press-forming according to any one of [4-1] to [4-5], wherein the overlap section of the blank for press-forming includes an L-shaped or T-shaped part.

### [ADVANTAGEOUS EFFECTS OF INVENTION]

According to the present invention, it is possible to obtain a press-formed part suppressed in cracks and other failure when press-forming (hot press-forming) a blank for press-forming comprised of a plurality of partial blanks joined into one piece and having an overlap section in which at least two of the partial blanks are overlaid (TWB). Due to this, it is possible to efficiently produce a part with a good productivity even if a large part with a complicated shape. Furthermore, it is possible to obtain a part excellent in collision resistance.

### BRIEF DESCRIPTION OF DRAWINGS

FIG. 1 is a schematic view showing the appearance of a single door ring of an automobile.
FIG. 2 is a view explaining a conventional general process of production of a part by press-forming a TWB.
FIG. 3 is a schematic view for explaining the configuration of a blank for press-forming of a door ring.
FIG. 4 is a conceptual view showing results of stress analysis of an overlap section of a lower A pillar. FIG. 4(a) is a conceptual view showing by a contour diagram the stress state of a lower A pillar part when viewed from the outside and FIG. 4(b) one showing the stress state of a rocker when viewed from the inside.
FIG. 5 is a conceptual view showing an example of a weld point of spot welding an overlap section of a lower A pillar. FIG. 5(a) is a conceptual view for explanatory use showing an example of weld point positions of spot welding of an overlap section of a lower A pillar, while FIG. 5(b) is one showing a section with a risk of failure in weld point positions of spot welding surrounded by solid lines and a section with no risk of failure surrounded by broken lines.
FIG. 6 is a conceptual view showing spot welding positions of an overlap section determined by analysis by simulation. FIG. 6(a) is a conceptual view showing an example of spot welding at an overlap section (L-shape) of a lower A pillar and an overlap section (T-shape) of a lower B pillar when viewed from the outside, while FIG. 6(b) is a conceptual view showing the same when viewed from the inside.
FIG. 7 is a conceptual view found by simulation by an FEM showing a stress state after hot pressing the integrated blank of FIG. 6. FIG. 7(a) is a conceptual view showing the stress state at an overlap section (L-shape) of a lower A pillar and an overlap section (T-shape) of a lower B pillar when viewed from the outside, while FIG. 7(b) is a conceptual view showing the same when viewed from the inside.
FIG. 8 is a view explaining a process of production of a part by press-forming a TWB according to the present invention.
FIG. 9 is an explanatory view for explaining an HAZ softened part due to spot welding.
FIG. 10 is a conceptual view for explaining an example of application of the present invention to a floor module of an automobile.
FIG. 11 is a conceptual view showing a lap welding position of an overlap section determined by analysis by simulation and showing an example of the case of lap welding instead of the spot welding of FIG. 6. FIG. 11(a) is a conceptual view showing an example of lap welding at an overlap section (L-shape) of a lower A pillar and an overlap section (T-shape) of a lower B pillar when viewed from the outside, while FIG. 11(b) is a conceptual view showing the same when viewed from the inside.

### DESCRIPTION OF EMBODIMENTS

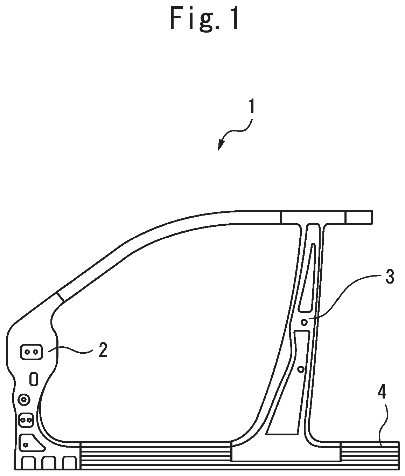

The present invention will be explained with reference to a door ring of an automobile as an embodiment of the present invention (below, simply referred to as "the present invention"). FIG. 1 shows a view of the appearance of a single door ring 1 as one example of a door ring of an automobile. This door ring 1 even by itself is usually comprised of a plurality of types of steel sheets combined. For example, an A pillar 2 of the door ring 1 (also called a "front pillar") and a B pillar 3 (also called a "center pillar") sometimes are comprised of a combination of an upper part of 2.0 GPa class high strength steel sheet from the viewpoint of securing an inside space at the time of collision and a lower part joined with a rocker 4 of 1.3 GPa class high strength steel sheet for securing workability and toughness. If producing such a part by press-forming, as the press-forming blank, partial blanks forming the respective parts are joined to produce a tailored welded blank (TWB) and that tailored welded black is press-formed to produce a part forming the door ring. Such obtained parts are further welded to produce the door ring.

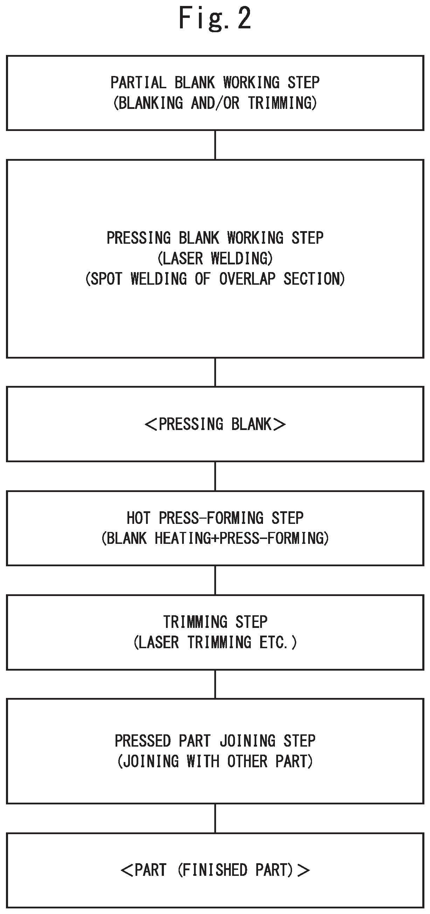

FIG. 2 shows an outline of the general process of production of a part (press-formed part) by press-forming a TWB.

### Partial blank working step:

A step of producing partial blanks forming parts of the tailored welded blank. The partial blanks are cut out from a predetermined steel sheet (blanking) and trimmed by laser trimming etc. to produce the partial blanks.

### Pressing blank working step:

A step of joining the obtained partial blanks to produce a blank for press-forming (tailored welded blank). The method of joining the partial blanks is not particularly limited. For example, when butt welding the partial blanks, laser welding or arc welding can be used. Further, when overlaying the partial blanks and joining the overlap sections, for example, spot welding (resistance spot welding, laser spot welding, etc.), lap welding (arc welding, laser welding), lap fillet welding (arc welding, laser welding), brazing, friction stir welding (FSW), friction press welding, etc. can be used to join them. It is possible to join a predetermined combination of partial blanks into one piece to obtain a blank for press-forming.

### Hot press-forming step:

A step of hot press-forming the obtained blank for press-forming (tailored welded blank). By press-forming the blank for press-forming, it is possible to obtain a part or a part of a shape close to the part (near net shape) (part obtained after hot pressing step called a "press-formed part"). The press-forming method is not particularly limited, but in general when press-forming a blank in which high strength steel sheet (for example, steel sheet having a more than 590 MPa high strength) is used, hot press-forming is preferable. Hot press-forming is also called "hot stamping ("hot stamping method") and is a press-forming method heating the blank (steel sheet) to the approximately 900°C austenite temperature region, then press-forming it and simultaneously rapid cooling to temper it by martensite transformation. Hot press-forming has the characteristics of being able to reduce the press load since shaping at a high temperature and resulting in high strength while being excellent in shape freezability after shaping since causing martensite transformation. For this reason, it is often used for press-forming high strength steel sheet.

### Trimming step:

A step of trimming the press-formed part obtained by hot press-forming (including parts of part shape or near net shape parts). The method of trimming the press-formed part is not particularly limited. For example, processing to remove by laser any burrs etc. formed at the end parts of the press-formed part to tailor the part to a predetermined shape (laser trimming) etc. are included. Further, in the case of a near net shape press-formed part, processing for rendering it the final part shape is included. If the press-formed part of the final shape is obtained by the hot press-forming, this trimming step can be omitted.

### Pressed part joining step:

A step of joining the obtained press-formed part with another part when joining them is necessary. The method of joining the separate part is not particularly limited. For example, spot welding, arc welding, laser welding, brazing, and other joining methods are sometimes used for joining it. Further, sometimes a partial reinforcement member is attached to the press-formed part and sometimes a part which cannot be shaped by press-forming etc. is joined. Of course, if there is no need to join another part, this pressed part joining step can be omitted.

By passing through these steps, the finally targeted part (press-formed part) can be obtained. Note that, the process of production of a part by press-forming a TWB is not limited to the steps explained above. Other necessary steps can be added.

Recently, greater efficiency and lower costs have been sought in production of parts. Increased size of parts and modules (parts obtained by further assembling small parts) have been sought. For example, in the case of a door ring of an automobile, rather than separately producing and assembling the afore-mentioned A pillar, B pillar, etc., producing a door ring by bulk press-forming has been sought. For that reason, a blank for press-forming for use for bulk press-forming of a door ring has become necessary.

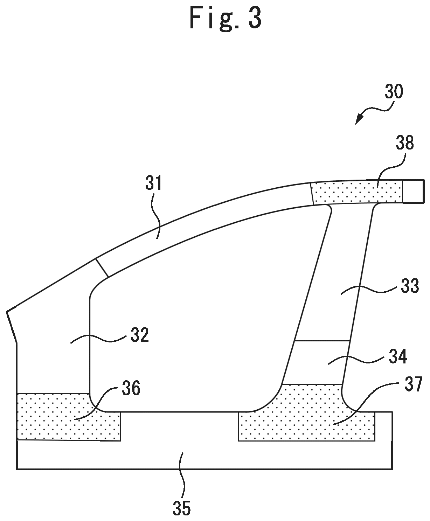

FIG. 3 shows an example of a blank for press-forming 30 of a door ring 1 (example of single door ring of FIG. 3). The blank for press-forming 30 of FIG. 3 is configured by joining partial blanks corresponding to the upper A pillar 31 (also called "A pillar, upper"), lower A pillar 32 (also called "A pillar, lower"), upper B pillar 33 (also called "B pillar, upper"), lower B pillar 34 (also called "B pillar, lower"), and rocker 35. The respective partial blanks may be the same in steel type or sheet thickness or may be different. In the example of FIG. 3, for example, the lower A pillar 32 is made of sheet thickness 1.4 mm 1.5 GPa class steel sheet, the upper B pillar 33 is made of sheet thickness 1.4 mm 2.0 GPa class steel sheet, the lower B pillar 34 is made of sheet thickness 1.2 mm 1.0 GPa class steel sheet, the rocker 35 is made of sheet thickness 1.2 mm 1.5 GPa class steel sheet, and the upper A pillar 31 is made of sheet thickness 1.4 mm 2.0 GPa class steel sheet. These partial blanks are joined into one piece to produce a blank for press-forming 30 (below, sometimes called "tailored welded blank").

In the example of FIG. 3, in the case of the door ring 1, the lower A pillar (A pillar, lower) 32 and rocker 35, lower B pillar (B pillar, lower) 34 and rocker 35, and, furthermore, the upper B pillar (B pillar, upper) 33 and upper A pillar (A pillar, upper) 31 are overlaid and joined to produce the door ring 1. For that reason, to produce such a door ring by bulk press-forming, the partial blank corresponding to the lower A pillar 32 and the partial blank corresponding to the rocker 35 are overlaid to produce the tailored welded blank 30. Similarly, partial blanks respectively forming the lower B pillar 34 and rocker 35, the upper B pillar 33, and upper A pillar 31 are overlaid to produce the tailored welded blank 30. FIG. 3 shows an outline of the configuration of the partial blanks of the blank for press-forming of the door ring. The part where the partial blanks are overlaid (overlap section) is shown in FIG. 3 by hatching. The overlap section 36 of the lower A pillar 32 and rocker 35 becomes an L-shape, the overlap section 37 of the lower B pillar 34 and rocker 35 becomes a T-shape, and the overlap section 38 of the upper B pillar 33 and the upper A pillar 31 also becomes a T-shape.

Note that, in the example of FIG. 3, the overlap section is comprised of two partial blanks, but the number of partial blocks overlaid is not limited. For example, three or more partial blanks may also be overlaid. This may be determined in accordance with the demanded properties and shape etc. of the finally produced part.

In this way, a shape when viewed from vertically above the part surface forming a generally L letter will be referred to as an "L-shape" while one forming a generally T letter will be referred to as a "T-shape". In a 3D structure with a cross-sectional shape of a hat shape like in the overlap section 36 of the lower A pillar 32 and rocker 35 etc., in the case of a complicated shape such as an L-shape or T-shape when viewed from above, the material flow behavior at that corner parts becomes complicated. Therefore, cracking easily occurs due to press-forming the tailored welded blank.

### [Overlap Section]

If joining the overlap section as a whole to produce a tailored welded blank, sometimes failure (cracks, fracture, etc.) occurs at the overlap section after press-forming. If observing the section where failure occurred, it was learned that failure often occurred at a location with a greater reduction of sheet thickness due to press-forming. Therefore, the inventors analyzed the causes of occurrence of failure and thereby completed the present invention.

Note that, the method of joining when joining an overlap section of partial blanks and joining sections after pressing is not particularly limited. As the joining method, for example, resistance welding (resistance spot welding, projection welding, seam welding, etc.), arc welding (lap arc welding, lap fillet arc welding), laser welding (lap laser welding, lap fillet laser welding, laser spot welding), friction stir welding (FSW), friction press welding, brazing, etc. can be applied. Further, in joining sections after pressing, mechanical fastening methods may also be applied.

Below, in the explanation of the present invention, the case of applying spot welding (resistance spot welding) as the joining method will be explained. The present invention is not limited to the forms explained below. In particular, the welding method is not limited to spot welding. The above-explained various joining methods and joining methods resembling the same can be applied. Application to other joining methods can be understood by reading the "spot welding" in the explanation as the other joining methods.

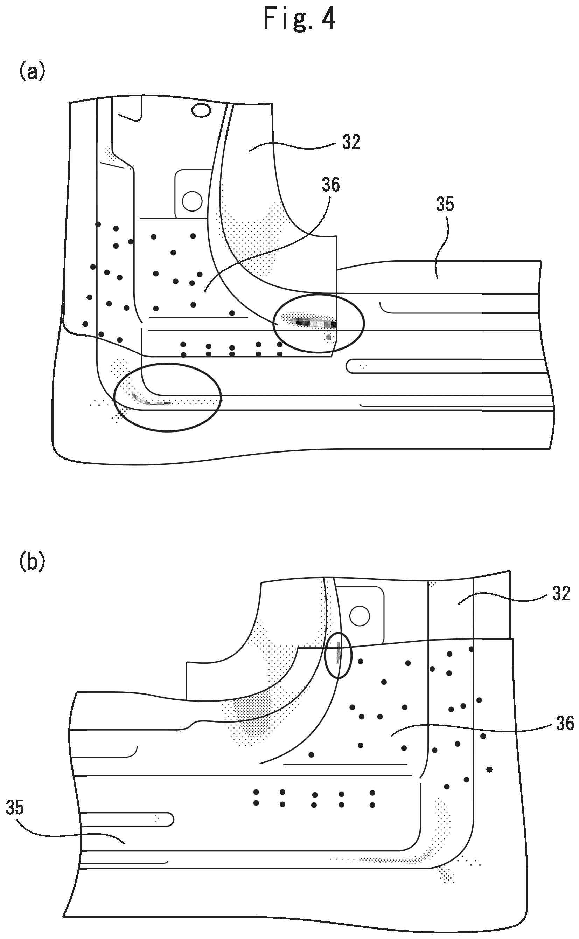

For analysis of the causes of occurrence of failure, a simulation technique like the finite element method (finite element method) can be used. The inventors analyzed the causes by FEM. FIG. 4 shows the results of analysis at the L-shape overlap section 36 of the lower A pillar 32 and rocker 35. FIG. 4(a) shows by a contour diagram the stress state of a lower A pillar 32 when viewed from the outside and FIG. 4(b) one showing the stress state of a rocker 35 when viewed from the inside. Note that, a section where failure actually occurred corresponds to a section surrounded by the oval and made darker in the contour diagram. If comparing these, it was confirmed that failure actually occurs at the section shown by simulation to become higher in shear stress and to be in a failure state.

From the results of analysis, it was learned that, as factors of failure, (i) the material inflow behaviors of the partial blanks greatly differ when the overlap section is deformed and (ii) the material inflow behaviors are limited by spot welding, were in action. Here, "material inflow" is the deformation (movement) of a material due to press-forming, while the "material flow behavior" is the deformation behavior of how much of a distance in what direction the material of a specific position deforms (moves) before and after press-forming.

If the difference in material inflow amount among the partial blanks becomes greater (factor (i)), it is believed shear deformation occurs at a spot welded part and large deformation concentrates near the spot welded part. There, material flow is restricted (factor (ii), whereby deformation accompanied by material inflow no longer occurs like in stretch flange deformation. As a result, it is believed deformation easily concentrates and failure occurs.

Therefore, to stop failure of a tailored welded blank due to press-forming, the inventors focused on the material flow behaviors of the partial blanks during hot press-forming. That is, they thought that by using simulation in advance to obtain a grasp of the material flow behaviors of the partial blanks forming an overlap section, dividing them into sections with little difference of inflows of materials of the partial blanks (difference in material inflow amounts of the partial blanks) and sections with large difference of inflows, spot welding the partial blanks only at the sections with little difference of inflows of materials, and not spot welding them at the other sections, it would be possible to stop failure at the time of press-forming and proceeded with development on that basis.

As a result, it was confirmed that even at sections with a large difference in material inflow amounts of the partial blanks, such as sections deforming by stretch flanging, hot press-forming is performed with no occurrence of failure so long as not spot welding. That is, it was confirmed that even if a large difference in material flow behaviors of partial blanks remained at the time of deformation of the overlap section of the above-mentioned factor (i), occurrence of failure could be stopped if eliminating the restriction on material flow behavior due to spot welding of the factor (ii).

The "difference in material inflow amounts of the partial blanks" is the absolute value of the difference in movement vectors in partial blanks forming the overlap section obtained as a result of movement due to press-forming of any points (positions) corresponding to points (positions) of the overlap section before shaping. That is, the movement vectors of points are found from points (positions) which the points (positions) corresponding to any points (positions) of the overlap section move to after press-forming. The absolute value of the difference of the movement vectors of the points (positions) of the partial blanks (distance between points (positions) after movement) is found as the difference of material inflow amounts (offset amount) of those points (any points of overlap section).

A specific example of the simulation will be shown. As explained above, the explanation will be given with reference to the example of spot welding, but the explanation may be applied based on this example even in the case of other joining methods. For example, at least at one point of the part at the overlap section becoming the top surface part when press-formed (part pressed by pad or die) (for example, center of gravity of overlap section, center of gravity of top surface part, etc.), the press-forming (hot press-forming) of the tailored welded blank is analyzed (analysis by simulation by FEM etc.) assuming the partial blanks are fastened (indicating state where they are joined by spot welding etc.) At that time, the movement vectors of the respective points are found from the positions before and after movement of the points of the partial blanks corresponding to any points of the overlap section. The absolute value of the difference of movement factors of the points corresponding to each partial blank obtained is found as the difference in material inflow amounts (offset amount) of the points. If the difference in material inflow amounts (offset amount) is smaller than a preset limit value (explained later, but for example 1 mm, preferably 0.5 mm), since the difference in material inflow amounts is small, it can be made a point (position) for spot welding before press-forming. On the other hand, if the difference in material inflow amounts (offset amount) is larger than a preset limit value, since the difference in material inflow amounts is large, it is sufficient to not perform spot welding before press-forming but to perform spot welding after press-forming.

The inventors investigated the relationship of the difference in material inflow amounts (offset amount) at a joint formed by hot pressing and the tensile shear strength (TSS) at room temperature and thereby discovered that if the difference in material inflow amounts (offset amount) in hot pressing is larger than 0 to 1 mm (larger than 0 mm and 1 mm or less), the tensile shear strength (TSS) at room temperature becomes equal to or greater than the original TSS (TSS at time of offset amount of 0 mm). The technical reason for this phenomenon has not been elucidated, but it is guessed that if the offset amount is small (1 mm or less), perhaps a synergistic effect between the work strain introduced by hot pressing and hardening by quenching is obtained.

One example of a specific test will be explained. 1.5 GPa class steel sheets (sheet thickness 1.2 mm) were overlaid and spot welded to form a joint (test piece). This was heated to 900°C, then held there for 1 minute. After that, the steel sheets were pulled apart at 740°C to shift them by a predetermined length (offset amount), then quenched to prepare a test piece. Next, the test piece was pulled at room temperature by 1 mm/s, and the offset amount of the two steel sheets and the tensile shear strength (TSS) at room temperature of the joint (spot welded part) were observed. As a result, if the offset amount of the steel sheets when hot was 0 to 1.0 mm, the TSS of the joint at room temperature became a TSS equal to or greater than 0 mm (that is, when not hot deformed). On the other hand, if the offset amount became more than 1.0 mm, the TSS tended to fall. Specifically, it was confirmed that under the test conditions, with an offset amount of 0.1 mm, the TSS became 102% by ratio with the TSS at the time of 0 mm, 105% at 0.3 mm, 107% at 0.5 mm, 102% at 0.7 mm, 100% at 1.0 mm, 90% at 1.2 mm, 86% at 1.5 mm, and 71% at 2.0 mm. That is, the inventors first discovered the fact that in hot press-forming (hot stamping) as well, even if a difference in material inflow amounts (offset amount) of 0.0 mm to 1.0 mm or less occurs at a spot welded point, a tensile shear strength of equal to or greater than that in the case of no deformation can be secured.

From this new discovery, when hot press-forming a tailored welded blank comprised of partial blanks overlaid, it is sufficient to set the limit value of the difference in material inflow amounts (offset amount) to 1.0 mm. Preferably, it may be set in advance to 0.9 mm, 0.8 mm, 0.7 mm, 0.6 mm, or 0.5 mm.

The points (positions) for finding the difference in material inflow amounts do not particularly have to be limited. For example, it is sufficient to analyze the difference in material inflow amounts at points (positions) finally set as the positions for spot welding. Further, for example, it is possible to make the analysis mesh finer and find a region where the difference in material inflow amounts becomes the limit value or less. In this case, the points (positions) for spot welding before press-forming may be set in a region analyzed to have a small difference in material inflow amount.

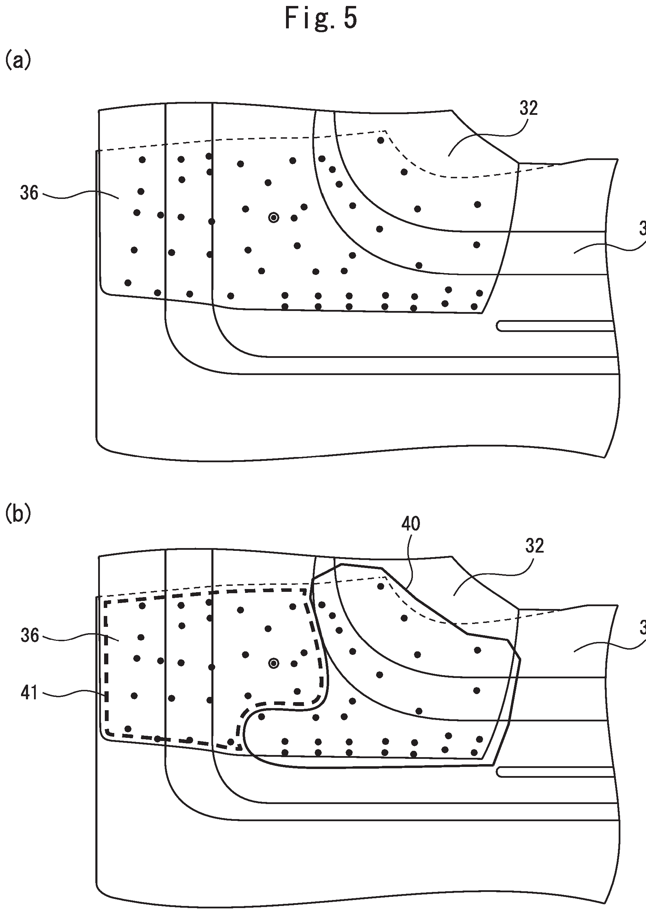

FIG. 5(a) shows examples of weld point positions of spot welding of an overlap section 36 of a lower A pillar 32 and rocker 35 (black circle marks (•) in the figure). If spot welding before press-forming at all weld points, as shown in FIGS. 4(a) and (b), it was confirmed that stress concentrates at locations where failure actually occurs (parts surrounded by ovals in FIGS. 4(a) and (b)).

Next, assuming spot welding at only the double circle point (point with black dot in the middle of a white dot) at the substantial center in the overlap section 36 shown in FIG. 5(a) and not spot welding at all other weld point positions (points shown by just black circle marks (•)), the inventors simulated press-forming by FEM and found the material inflow amounts (movement vectors) of the lower A pillar 32 and the rocker 35. Further, at each node of the FEM as well, the material inflow amounts (movement vectors) at corresponding points of partial blanks forming the overlap section 36 were found and the difference in material inflow amounts (movement vectors) of the partial blanks (difference in material inflow amounts) was found. The limit value of the absolute value of the difference of material inflow amounts at the corresponding nodes (sometimes simply referred to as the "limit value of the difference in material inflow amounts"), as explained above, was set to 1.0 mm and a section with a difference in material inflow amount of that or more was set as a section with risk of failure. As a result, a section 40 surrounded by the solid line in FIG. 5(b) is a section judged be a section 40 with risk of failure if spot welded and press-formed.

The method of finding a region with a small difference in material inflow amounts is not particularly limited. As explained above, it may be set from analysis by simulation by FEM etc. or the actual values of off-line experiments in advance or actual pressing etc.

In addition to evaluation by the difference in material inflow amounts, the rate of reduction of sheet thickness may also be evaluated. For example, in the case of simulation by FEM, the rate of reduction of sheet thickness of each element may be found and this added to the above difference in material inflow amounts. This is because a section with a large rate of reduction of sheet thickness is more susceptible to concentration of deformation at a spot welded part, therefore the risk of failure becomes greater by that amount. In this case, the limit value may be determined by the rate of reduction of sheet thickness. The limit value is made an absolute value because sometimes the sheet thickness increases (for example, while wrinkles are formed) and, in this case, the rate of reduction of sheet thickness is expressed by a negative value. An absolute value of the rate of reduction of sheet thickness of 10% may be set as the limit value and a section with a rate of reduction of sheet thickness of that or more may be deemed a section with a higher risk of failure. The limit value of the rate of reduction of sheet thickness may preferably be 9%, 8%, 7%, 6%, or 5%. The rate of reduction of sheet thickness can be directly found by FEM analysis etc., therefore is also an indicator which is comparatively easy to grasp.

In FIG. 5(b), the section surrounded by the solid line shows the section 40 with a risk of failure. As opposed to this, the section surrounded by the bold broken line shows the section 41 with little risk of failure. Spot welding was performed at only the spot welding weld points in the section 41 with little risk of failure by this press-forming (section with rate of reduction of sheet thickness of limit value or less) to produce a tailored welded blank. Needless to say, the tailored welded blank was produced without spot welding at weld points in the other section (as section with risk of failure, section 40 with risk of failure surrounded by solid line in FIG. 5(b)).

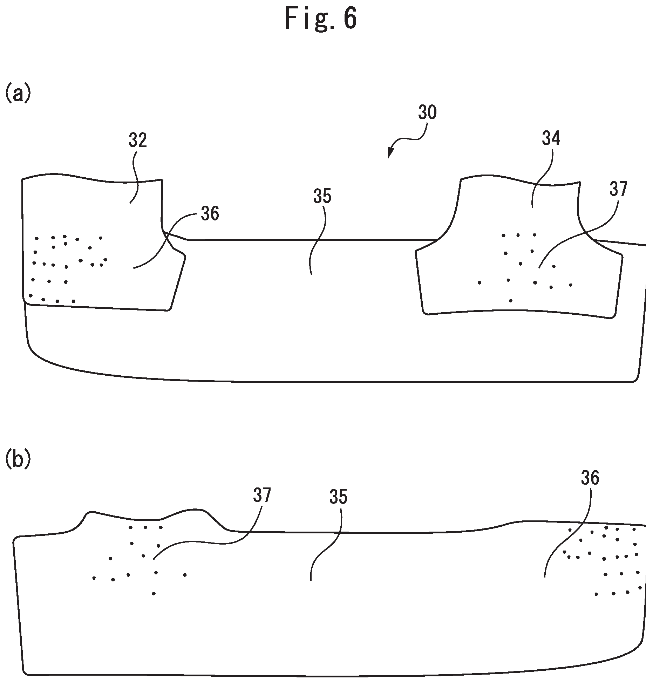

At the overlap section 37 of the lower B pillar 34 and the rocker 35 and the overlap section 38 of the upper B pillar 33 and the upper A pillar 31, similarly, the section for performing spot welding and other section (section without spot welding) were determined to produce a blank for press-forming 30. FIG. 6 is a schematic view showing the spot welding positions of the overlap sections 36, 37 of the lower A pillar 34 and the lower B pillar 34 with the rocker 35 determined by analysis by simulation. FIG. 6(a) shows the spot welding positions at the overlap section 36 (L-shape) of the lower A pillar 32 and the rocker 35 and the overlap section 37 (T-shape) of the lower B pillar 34 and the rocker 3 when viewing the rocker 35 from the outside. FIG. 6(b) is the same seen from the inside. The spot welding positions at the overlap sections 36, 37 of the rocker 35 will be understood from this. The tailored welded blank obtained by joining the partial blanks was hot pressed to produce a press-formed part used as a door ring.

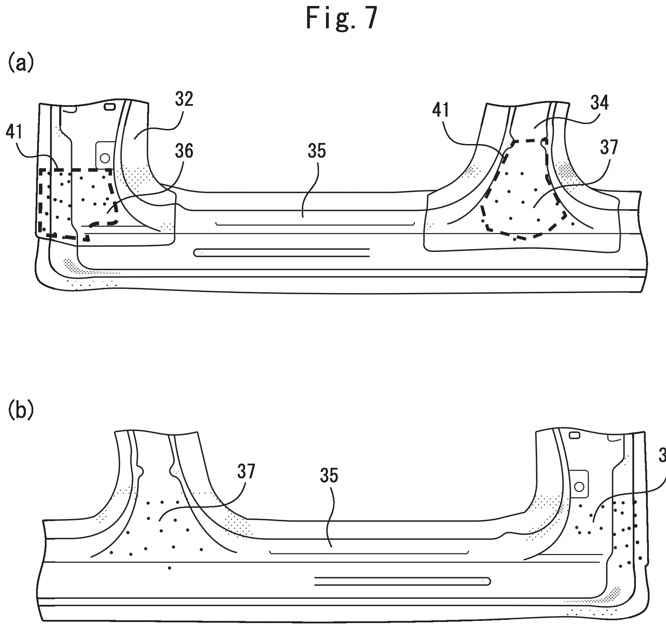

FIG. 7 schematically shows the stress state after hot pressing the tailored welded blank 30 shown in FIG. 6 as found by FEM simulation. FIG. 7(a) explains the stress state at the overlap section 36 (L-shape) of the lower A pillar 32 and the overlap section 37 (T-shape) of the lower B pillar 34 when viewed from the outside. In FIG. 7(a), the bold broken line shows the section 41 with little risk of failure. Spot welding is performed only at this section. FIG. 7(b) explains the stress state at the overlap sections 36, 37 of the rocker 35 when viewing the same from the inside. At the press-formed part after hot press-forming an actual tailored welded blank, that is, forming the door ring produced, failure was not observed at either of the overlap sections.

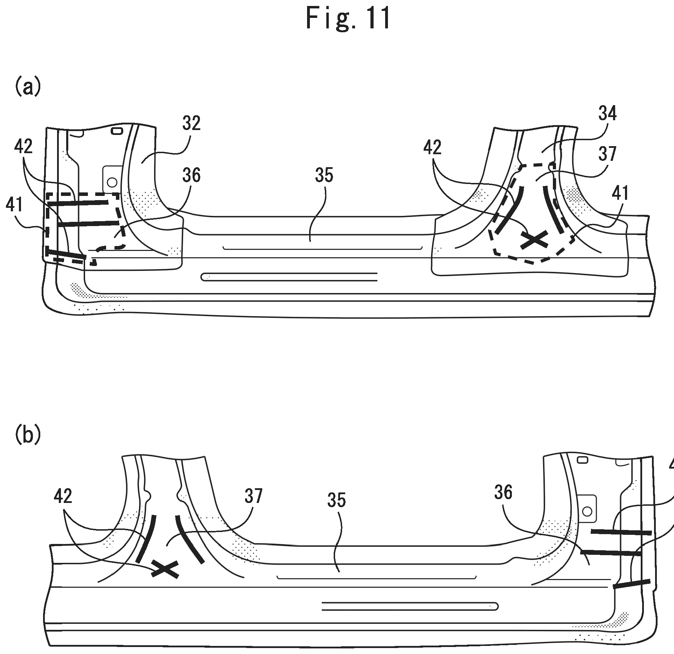

An example of lap laser welding is shown in FIG. 11 as an example of a joining method other than spot welding. The example of FIG. 11 produces a tailored welded blank the same as FIG. 6 by lap laser welding instead of the spot welding of FIG. 6. In FIG. 11, in the same way as FIG. 6, FIG. 11(a) shows the spot welding positions at the overlap section 36 (L-shape) of the lower A pillar 32 and the rocker 35 and the overlap section 37 (T-shape) of the lower B pillar 34 and the rocker 3 when viewing the rocker 35 from the outside (positions of weld line 420 of lap welding). In FIG. 11(a), the bold broken line shows a section 41 with little risk of failure. Only this section is lap welded. FIG. 11(b) is the same seen from the inside. The spot welding positions (positions of weld line 42) at the overlap sections 36, 37 of the rocker 35 will be understood from this. The tailored welded blank obtained by joining the partial blanks was hot pressed to produce a press-formed part used as a door ring.

In this case as well, only the section 41 with little risk of failure is lap laser welded to produce a tailored welded blank, but the method of drawing the weld line 42 of the lap welding is not particularly limited. In the same way as when determining the weld points of the spot welding, it is sufficient to join the overlap sections of the partial blanks at the end parts or center parts or both. FIG. 11 shows by a contour diagram the stress state after hot pressing a tailored welded blank 30 produced in this way. A stress state substantially equal to the case of producing a tailored welded blank by spot welding (FIG. 7) is obtained. Failure was not observed at the overlap sections of the partial blanks.

In summary, the material inflow amounts (movement vectors) of the partial blanks at an overlap section formed by press-forming may be found in advance (beforehand) and the partial blanks forming the overlap section may be joined only at a section with an absolute value of the difference of material inflow amounts at corresponding positions of the partial blanks (absolute value of difference of movement vectors) smaller than a predetermined limit value. The method of finding the difference in material inflow amounts of partial blanks by simulation in advance is not particularly limited. For example, FEM may be used to find the deformation behavior of the materials. A test piece simulating an actual overlap section may be used to find this behavior by a press-forming test. Further, for example, it is also possible to evaluate this by further adding the rate of reduction of sheet thickness before and after pressing at specific positions of the partial blanks.

Judgment of whether the difference of material inflow amounts is large can be evaluated by a predetermined limit value. The method of setting the predetermined limit value is not particularly limited. It may be set by analysis by simulation by FEM in advance, actual values, etc. If using the rate of reduction of sheet thickness for evaluation, the limit value may be determined by the absolute value of the rate of reduction of sheet thickness of the overlapping partial blanks. The limit value is made an absolute value since sometimes the sheet thickness increases (for example, if wrinkles form).

In particular, as explained above, an L-shaped part like the overlap section 36 of the lower A pillar 32 and rocker 35 and a T-shaped part like the overlap section 37 of the lower B pillar 34 and rocker 35 are parts accompanied with complicated deformation (complicated material flow behavior), so that effect becomes remarkable if the present invention is applied.

### [Joining at Pressed Part Joining Step]

The section of the overlap section of the tailored welded blank which is not joined (spot welded etc.) is not joined after press-forming as well, therefore sometimes the strength and rigidity become insufficient and the designed performance cannot be obtained. For that reason, the section in the overlap section not joined at the press-forming use blank working step may be joined (spot welded etc.) after the press-forming (after the pressing step).

In general, in many cases, a tailored welded blank is press-formed to obtain a press-formed part, then additional parts etc. are joined with the press-formed part (pressed part joining step). Therefore, a step of joining (spot welding etc.) a section not joined in the overlap section (in this example, spot welding) may be included in the pressed part joining step. This is because by joining a section in the overlap section not joined by an extension of the conventional pressed part joining step, this can be efficiently realized without adding a new step. A press-formed part can be obtained by going through these steps.

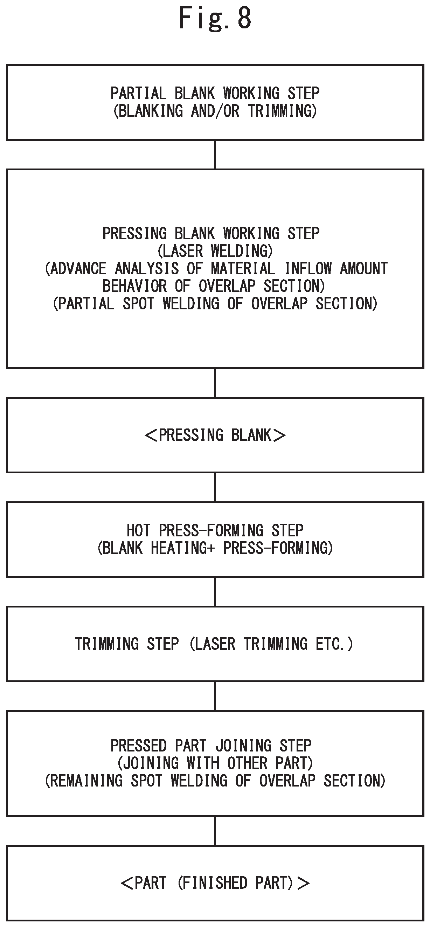

A summary of the process of production of a press-formed part by a TWB according to the present invention based on the above explanation will be shown in FIG. 8. If compared with a conventional production process (FIG. 2), they differ on the following points. In the pressing blank working step, the material flow behaviors of the partial blanks at the overlap section is analyzed in advance, a section of over a predetermined limit value is judged as a failure risk region, and a step is included of joining only at the section of the overlap section comprised of a section other than the failure risk section of the overlap section. Furthermore, a step is included of joining the section not joined at the overlap section in the pressed part joining step (remaining part).

### [Press-Formed Part]

The part obtained by the method explained above (press-formed part) is a press-formed part formed from a tailored welded blank comprised of a plurality of partial blanks made of steel sheets joined together, in which at least two partial blanks are made to partially overlap to form an overlap section, the partial blanks forming the overlap section being joined by a plurality of joined parts. Among the plurality of joined parts at the overlap section, some are joined before the hot press-forming while the remainder (joined parts other than that section) are joined after the hot press-forming. Therefore, if joining by spot welding or lap welding or other welding, friction stir welding, friction press welding, etc., HAZ softened parts formed before the hot pressing are eradicated by heat treatment in the hot pressing. On the other hand, joined parts obtained by welding, friction stir welding, etc. performed after hot press-forming are not heat treated at a hot press, therefore HAZ softened parts remain. That is, in the obtained part (press-formed part), the joined parts of the overlap section are free of HAZ softened parts at some of the overlap section and have HAZ softened parts at the other section. Below, the explanation will be given with reference to the example of spot welding. In particular, the fact that the joining method is not limited to spot welding is as explained above.

A "HAZ softened part" is a part formed by a heat affected zone (HAZ) in a base material at the immediate outside of a nugget of spot welding or the outer edge of weld metal formed by arc welding which is tempered and softens more than the base material. In friction stir welding or friction press welding or brazing as well, in the same way, the softened part formed at the heat affected zone (HAZ) of the base material formed at the immediate outside of the outer edge of that joined part is the "HAZ softened part". Below, the explanation will be given with reference to the example of spot welding.

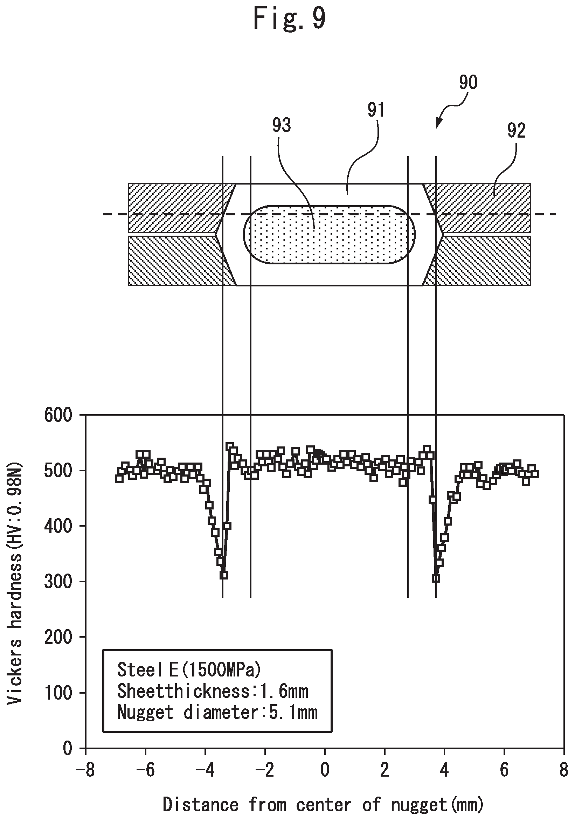

FIG. 9 shows one example of the correspondence between the results of investigation of the cross-section of a spot welding test piece 90 and a hardness distribution of the spot welded section 91 (vicinity of spot welding weld point) and base material 92 (corresponding to the partial blanks). Note that, in particular, unless otherwise indicated, the "hardness" (hardness degree) indicates the Vickers hardness. As will be understood in FIG. 9 as well, a spot welded part including a joined part (nugget) is quenched, therefore has a Hv500 or so hardness (the inside of a weld point of spot welding has substantially the same hardness, so the hardness at the center part of a weld point of spot welding may be used as a representative value). On the other hand, it is learned that the hardness becomes Hv300 or so and softens at a point about 1 mm away from the end part (outside edge) of a nugget 93 of spot welding (near the outside edge of the spot welded part). This softened part is a "HAZ softened part". Usually, a HAZ softened part is formed in a region within 5 mm at the furthest from an end part (outside edge) of the joined part (nugget or weld metal).

Furthermore, the further from the joined part (nugget 93), the more the hardness converges to the hardness of the base material 92 (in FIG. 9, it is shown converging to a less than Hv500 hardness). The hardness of the HAZ softened part at the center part of the weld point 91 of spot welding, for example, becomes Hv50 or more smaller in the case of the base material 92 being 1.0 GPa class steel sheet, becomes Hv100 or more smaller in the case of it being 1.5 GPa class steel sheet, and becomes Hv150 or more smaller in the case of it being 2.0 GPa class steel sheet. Generally speaking, if designating the hardness of the base material 92, that is, the hardness at a section of the base material 92 not affected by spot welding, as Hvm, designating the maximum value in the hardness measured in the range within a radius of 12 mm from the center of a spot welded part 91 (or within 5 mm from an end part of the joined part to the outside (base material side)) as the "maximum hardness" and the minimum value as the "minimum hardness", and designating the difference of the maximum hardness and minimum hardness as ΔHv, when the HAZ does not soften, ΔHv may be less than 0.2 Hvm, preferably 0.1 Hvm or less. Conversely speaking, if the HAZ softens, ΔHv may be 0.2 Hvm or more, preferably 0.3 Hvm, 0.4 Hvm, or 0.5 Hvm or more.

The hardness distribution of a HAZ softened part can be grasped by measuring the hardness (Vickers hardness) at a thickness direction cross-section including the center of the joined part (center of spot welding) of that partial blank at a 1/4 position of thickness from the surface where that partial blank contacts another partial blank from a center point of a weld point of spot welding toward the outside along a line (hardness measurement line) parallel to the partial blank surface, For example, it is sufficient to measure the hardness distribution at the thickness direction cross-section of the partial blank at the outermost side among the partial blanks forming the overlap section. First, as the base material hardness (the hardness at a part of the base material not affected by the spot welding), the hardness at a position 15 mm or more away from the center of the spot welding and not spot welded is measured and that hardness is designated as Hvm. Note that, the "partial blank at the outermost side" here means the partial blank at the surface side of the top surface when placing a press-formed part with the projecting shape facing upward.

Next, it is possible to measure the hardness from the outside edge of a weld point of spot welding toward the outside of the weld point in the range of 12 mm from the center of the spot welding weld point in a straight line along the center line of sheet thickness of the partial blank to obtain a grasp of ΔHv. In particular, in the range from a position 0.5 to 1 mm at the inside of the outer edge of a spot welding weld point to 2 to 3 mm of the outside of the outer edge, the measurement may be performed by a measurement interval (pitch) of 0.1 to 0.2 mm. This is because if within this range, often there is a minimum value of hardness of the HAZ softened part due to spot welding.

Spot welding with no HAZ softened parts is welding performed before hot press-forming. That is, it is spot welding of a part with a small difference in material inflow amounts of partial blanks at an overlap section. On the other hand, spot welding with HAZ softened parts is welding performed after hot press-forming, therefore is spot welding of a section with a large difference in material inflow amounts of partial blanks. For example, a section deformed by strength flanging by press-forming corresponds to this. That is, the press-formed part of the present invention has a ΔHv of less than 0.2 Hvm at some of the plurality of spot welds (spot welds of at least one location joined before hot press-forming). On the other hand, other spot welds (spot welds other than the above and spot welds of at least other locations joined after hot press-forming) have HAZ softened parts, therefore have a ΔHv of 0.2 Hvm or more.

Further, as explained in the above press-forming method, the press-formed part of the present invention is a press-formed part joined by spot welding etc. before press-forming at a section with an absolute value of a difference of material inflow amounts among partial blanks smaller than a predetermined limit value. the material inflow amounts of partial blanks at the overlap section formed by press-forming found in advance. That is, the above "some of the plurality of spot welds" (spot welds with ΔHv of less than 0.2 Hvm) are sections corresponding to this, that is, are sections with an absolute value of the difference of material inflow amounts smaller than a predetermined limit value.

It is possible to confirm from the shape of a press-formed part whether spot welding was performed before press-forming only at a section with an absolute value of difference of the material inflow amounts of partial blanks smaller than the limit value. For example, this can be analyzed by measuring the 3D shape centered on the overlap section of partial blanks at the press-formed part and obtaining shape data of that part. From the obtained 3D shape data, it is possible to produce data on the blank of the overlap section before press-forming. For example, an AUTOFORM R.10 made by AUTOFORM, or other device can be used to obtain data of the blank supplied for press-forming from the shape data of the press-formed part. The obtained data of the blank can be used, as explained in the above-mentioned method for manufacturing a press-formed part, to analyze the difference in the material inflow amounts of the partial blanks due to press-forming by FEM etc. Due to this, it is possible to judge whether spot welding not resulting in HAZ softened parts (spot welding performed before press-forming) falls in a section with a smaller difference in material inflow amounts due to press-forming than the limit value. Similarly, spot welding resulting in HAZ softened parts (spot welding performed after press-forming) can be judged by whether it falls in a section with a larger difference in material inflow amounts due to press-forming than the limit value.

Above, the explanation was given with respect to the example of spot welding. Even with joining methods other than spot welding, even when like with arc welding, laser welding, etc. heating the steel sheet forming the base material to make it melt to join it or even when like with friction stir welding or friction press welding, brazing, etc. heating the steel sheet forming the base material to join it without making it melt, similarly, an HAZ softened part is formed at the part joined after hot press-forming. For example, in the case of arc welding, a HAZ softened part is formed in the base material at the outside of the outer edge of the weld metal. The HAZ softened part is formed in the base material at the outside of the outer edge of the joined part even for example in the case of friction stir welding etc. Even with joining methods other than spot welding, in the same way as the case of spot welding, at the cross-section including the center of the joined part of the outermost side partial blank and vertical to the surface of the partial blank, the Vickers hardness may be measured along the hardness measurement line at the position at 1/4 of the sheet thickness from the surface of the partial blank contiguous with another partial blank.

For example, in the case of lap fillet welding or lap welding by arc welding or laser welding, it is sufficient to set the hardness measurement line and measure the hardness distribution at a cross-section vertical to the weld line. At this time, the center of the joined part may be made the center of the hardness measurement line in the weld metal. In the case of friction stir welding, friction press welding, and brazing as well, the hardness distribution may be measured in the same way as the case of spot welding.

The procedure for measurement of the hardness distribution is similar to that of spot welding, so that measurement procedure may be used as the basis. That is, at a partial blank to be measured, when designating the Vickers hardness at a position 15 mm or more away from the center of a joined part (weld metal etc.) and not joined as "Hvm", the difference of the maximum hardness and minimum hardness at the Vickers hardness in a range of within 5 mm from an end part of the joined part to the outside may be made ΔHv. Further, HAZ softening is eliminated at some of the joined parts (parts hot pressed after joining), so the ΔHv is less than 0.2 Hvm, preferably is 0.1 Hvm. At the other joined parts (joined parts other than the above section which are, for example, joined after hot pressing), HAZ softening occurs, so the ΔHv is 0.2 Hvm or more, preferably 0.3 Hvm, 0.4 Hvm, or 0.5 Hvm or more.

### [Other Embodiments]

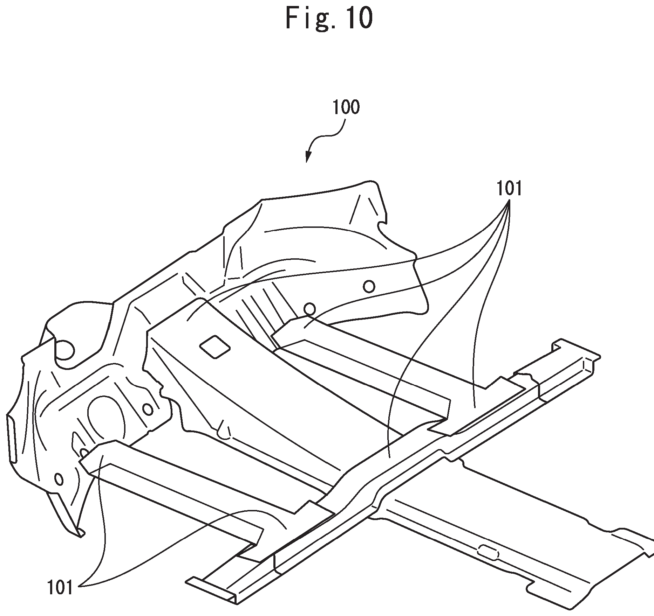

FIG. 10 is a schematic view of an embodiment of application to a floor module 100 of an automobile. In the past, parts were separately produced, then overlaid and joined (spot welded) to produce a floor module. However, the method for manufacturing a blank according to the present invention could be applied to produce an integrated blank (blank for press-forming) of the front module 100 and this could be hot pressed all together to produce the floor module 100. At this time, the blank and method for manufacturing the blank according to the present invention were applied to the joining operation (spot welding etc.) of overlap sections 101 at six locations. As a result, even with bulk hot pressing, it was possible to obtain a floor module 100 without failure at all of the overlap sections 101.

As explained above, the part obtained by the present invention (press-formed part) is free of cracks etc. and excellent in collision resistance. Compared with a part in which all of the spot welding is performed before or after hot press-forming, such as with conventional spot welded assembled parts, the press-formed part of the present invention has the following superior features.

Compared with a conventional part completely spot welded before hot press-forming, the press-formed part of the present invention is improved in shapeability. For this reason, the depth of a part can be made deeper, the angle of the standing wall parts can be made sharper, and the overall plastic bending moment of the cross-sections can be raised. Furthermore, the excessive reduction in sheet thickness introduced at joined parts (spot welded parts etc.) of parts with large material flows can be eliminated, therefore the collision resistance as a module can be improved.

Furthermore, the press-formed part of the present invention eliminates the HAZ softened parts of mainly the top surface parts (for example, top surface parts etc. of parts with hat shaped cross-sections), can improve the bond strengths of the members, and can improve the collision resistance as a module.

Above, the blank for press-forming, method for manufacturing the blank for press-forming, press-formed part, and method for manufacturing the press-formed part according to the present invention were explained using as examples a door ring and floor module of an automobile. The blanks, parts, and methods of production of the same according to the present invention are not limited to the embodiments used in the above explanation. The present invention can be applied without limitation as to the type or structure so long as a TWB having an overlap section.

### [INDUSTRIAL APPLICABILITY]

The present invention can be widely utilized in the automobile and other transport machinery industries, general machinery industries, electrical equipment, and other industrial fields.

### REFERENCE SIGNS LIST

1 door ring
2 A pillar (front pillar)
3 B pillar (center pillar)
4 rocker
30 blank for press-forming
31 A pillar, upper (upper A pillar)
32 A pillar, lower (lower A pillar)
33 B pillar, upper (upper B pillar)
34 B pillar, lower (lower B pillar)
35 rocker
36 lower A pillar and rocker overlap section
37 lower B pillar and rocker overlap section
38 upper B pillar and upper A pillar overlap section
40 part with failure risk
41 part with little failure risk
42 weld line of lap welding
90 spot welding test piece
91 spot welded part (spot welding weld point)
92 base material
93 nugget

## Claims

1. A method for manufacturing a press-formed part comprising
a press-forming use blank working step for obtaining a blank for press-forming comprised of a plurality of partial blanks made of steel sheets joined into one piece, the blank for press-forming having an overlap section configured by at least two partial blanks partially overlaid,
a hot press-forming step for hot press-forming the blank for press-forming to thereby obtaining a press-formed part, and
a pressed part joining step for joining sections of the press-formed part,
the press-forming use blank working step including a step of finding in advance the material inflow amounts of the partial blanks forming the overlap section due to press-forming and joining the partial blanks forming the overlap section at only a section with a difference of material inflow amounts of the partial blanks smaller than a predetermined limit value, and
the pressed part joining step including a step of joining a section in the overlap section not joined in the press-forming use blank working step.

2. The method for manufacturing a press-formed part according to claim 1, wherein the joining method is spot welding.

3. The method for manufacturing a press-formed part according to claim 1 or 2, wherein the predetermined limit value is an absolute value of difference of material inflow amounts of the partial blanks due to press-forming of 1 mm.

4. The method for manufacturing a press-formed part according to any one of claims 1 to 3, wherein the overlap section of the press-formed part includes an L-shaped or T-shaped part.

5. A press-formed part
comprised of a plurality of partial blanks made of steel sheets joined together
at least two of the partial blanks being partially overlaid to configure an overlap section joined by a plurality of joined parts,
at a cross-section vertical to the surface of the partial blank including the center of a joined part of the partial blank at the outermost side among the partial blanks, at the position of the partial blank at 1/4 of the sheet thickness from the surface of the partial blank contiguous with another partial blank,
when the Vickers hardness at a position 15 mm or more away from the center of the joined part and not joined is Hvm,
some of the plurality of joined parts have a difference ΔHv of a maximum hardness and minimum hardness at the Vickers hardness in a range within 5 mm from an end part of the joined part to the base material side of less than 0.2 Hvm, preferably 0.1 Hvm or less, while other joined parts of the plurality of joined part have a ΔHv of 0.2 Hvm or more.

6. The press-formed part according to claim 5, wherein the joining method is spot welding.

7. The press-formed part according to claim 5 or 6, wherein some of the plurality of the joined parts are set to a section with an absolute value of the difference of material inflow amounts of the partial blanks smaller than a predetermined limit value when finding in advance the material inflow amounts of the partial blanks at the overlap section due to press-forming.

8. The press-formed part according to claim 7, wherein the predetermined limit value is an absolute value of difference of material inflow amounts of the partial blanks due to press-forming of 1 mm.

9. The press-formed part according to any one of claims 5 to 8, wherein the joined parts other than the some of the plurality of joined parts are set to a section deforming by stretch flanging due to press-forming.

10. The press-formed part according to any one of claims 5 to 9, wherein the overlap section of the press-formed part includes an L-shaped or T-shaped part.

11. A method for manufacturing a blank for press-forming comprised of a plurality of partial blanks made of steel sheets joined into one piece, the blank for press-forming having an overlap section configured by at least two partial blanks partially overlaid,
the method for manufacturing a blank for press-forming including a step of finding the material inflow amounts of the partial blanks due to press-forming in advance at the overlap section and joining the partial blanks forming the overlap section at only a section with a difference of material inflow amounts of the partial blanks smaller than a predetermined limit value.

12. The method for manufacturing a blank for press-forming according to claim 11, wherein the joining method is spot welding.

13. The method for manufacturing a blank for press-forming according to claim 11 or 12, wherein the predetermined limit value is an absolute value of difference of material inflow amounts of the partial blanks due to press-forming of 1 mm.

14. The method for manufacturing a blank for press-forming according to any one of claims 11 to 13, wherein the overlap section of the press-formed blanks includes an L-shaped or T-shaped part.

15. A blank for press-forming comprised of a plurality of partial blanks made of steel sheets joined into one piece, the blank for press-forming having an overlap section configured by at least two partial blanks made to partially overlap,
in which blank for press-forming, the partial blanks configuring the overlap section being joined at one section of the overlap section and not being joined at another section.

16. The blank for press-forming according to claim 15, wherein the joining method is spot welding.

17. The blank for press-forming according to claim 15 or 16, wherein the one section of the overlap section is a section with an absolute value of the difference of material inflow amounts of the partial blanks smaller than a predetermined limit value when finding in advance the material inflow amounts of the partial blanks at the overlap section due to press-forming.

18. The blank for press-forming according to claim 17, wherein the predetermined limit value is an absolute value of difference of material inflow amounts of the partial blanks due to press-forming of 1 mm.

19. The blank for press-forming according to any one of claims 15 to 18, wherein the other section of the overlap section is a part deformed by strength flanging by press-forming .

20. The blank for press-forming according to any one of claims 15 to 19, wherein the overlap section of the blank for press-forming includes an L-shaped or T-shaped part.
